# EUROPEAN PATENT SPECIFICATION

(11) **EP 0 331 013 B1**
(45) Date of publication and mention of the grant of the patent: **05.01.1994**
(21) Application number: 89103184.1
(22) Date of filing: 23.02.1989
(51) Int. Cl.: B29C 45/17, B25D 3/00

(54) **Tool for removing the remaining plastic from the gate of an injection mold**
Werkzeug zum Entfernen des restlichen Kunststoffes aus dem Anguss einer Spritzgussform
Outil pour enlever les restes de matière plastique de l'orifice d'entrée d'un moule pour l'injection

(30) Priority: 29.02.1988 JP 26411/88 U
(43) Date of publication of application: 06.09.1989
(73) Proprietor: KABUSHIKIGAISHA SANKO CHEMICAL, Ota-ku Tokyo 143 (JP)
(72) Inventor: Shiina, Fumiyuki, Tatebayashi-shi Gunma-ken (JP)
(74) Representative: Behrens, Dieter, Dr.-Ing.

(56) References cited:
- CH-A- 428 195
- FR-A- 1 168 010
- FR-A- 2 570 014
- GB-A- 224 046

## Description

### BACKGROUND OF THE INVENTION

### FIELD OF THE INVENTION

The present invention relates to a tool for removing the remaining plastic from the gate of an injection mold, which tool is called "injection mold gate cleaner" hereinafter and in the claims.

As is well known, a plastic material is poured into an injection mold, and then the material is left in the gate of the injection mold to close the gate when it becomes hard. The remaining hardened plastic must be removed from the gate of the injection mold before pouring the melted material. Then, an injection mold gate cleaner is used.

### DESCRIPTION OF THE PRIOR ART

A conventional injection mold gate cleaner is a brass rod having a conical tip. In use the conical tip of the rod is inserted in the gate of the injection mold, and the rear end of the rod is struck by a hammer to remove the remaining plastic from the gate of the injection mold. Brass is less hard than the material of the injection mold, and therefore there is no fear of causing damage to the gate of the injection mold. The tip end of the rod, however, will be worn and rounded. As a result the tip end of the rod cannot be inserted deep in the gate of the injection mold, and therefore the remaining plastic cannot be removed completely.

The tapered brass rod must be ground and sharpened every time its tip is worn and rounded. This, however, is tedious and time-consuming work. Still disadvantageously, brass powder is produced while the brass rod is ground, and sometimes such pulverized brass is put in a plastic molding machine. This causes an adverse effect on the quality of precision molds.

### SUMMARY OF THE INVENTION

One object of the present invention is to provide an injection mold gate cleaner requiring no grinding.

Another object of the present invention is to provide an injection mold gate cleaner making it possible to improve the molding efficiency.

To attain these objects an injection mold gate cleaner according to the present invention comprises a disposable tapered end of a metal which is less hard than iron, and a shank to which said disposable tapered end is detachably fixed. The tapered end may have a conical shape, and the shank may have a polygonal shape in cross section. In use the tapered end of the rod is inserted in the gate of the injection mold, and the rear end of the rod is struck by a hammer to remove the remaining plastic from the gate of the injection mold. When the tip end of the rod is worn and rounded, it is removed from the shank, and a new tapered end is attached to the shank. Replacement of a worn tapered end by a new one makes it unnecessary to grind the worn tapered end.

Other advantages of the present invention will be understood from the following description of injection mold gate cleaners according to preferred embodiments of the present invention, which are shown in the accompanying drawings:
Fig.1 is a side view of an injection mold gate cleaner according to a first embodiment of the present invention;
Figs.2 and 3 are longitudinal sections of different tapered ends;
Fig.4 shows how the injection mold gate cleaner is used to remove the remaining plastic from the gate of the injection mold; and
Figs.5 to 7 are longitudinal sections of different tapered end.

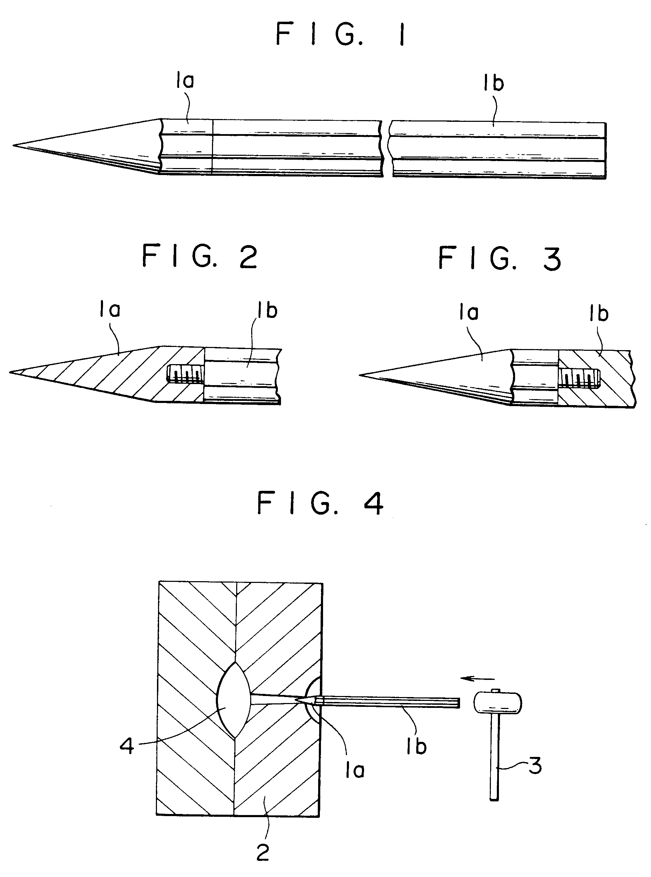

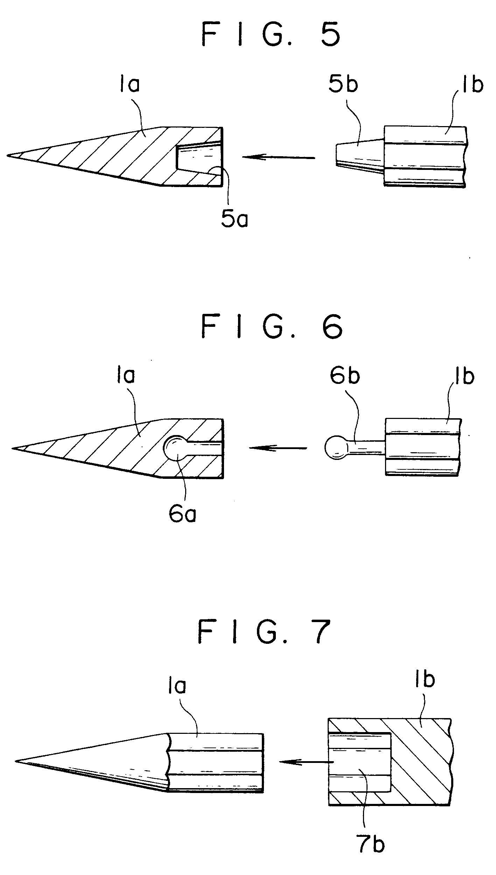

Fig.1 shows an injection mold gate cleaner according to a first embodiment of the present invention as comprising a disposable tapered end 1a of a metal which is less hard than iron, such as brass, copper or aluminium, and an iron shank 1b to which the disposable tapered end 1a is detachably fixed. The injection mold is made of iron. As shown in Fig.2 or 3, the tapered end 1a and the shank 1b are detachably connected to each other by screwing the male-tapped projection of the shank (or the tapered end) to the female-tapped recess of the tapered end (or the shank). The shank and the portion of the tapered end excluding the conical tip are made in the form of polygon, thereby preventing the tool from rolling when put on a flat top. In use a worker holds the shank 1b of the tool in hand, and he puts the cylindrical tip of the tapered end 1a is inserted in the gate of the mold 2 to strike the rear end of the shank with a hammer 3, thereby removing the remaining plastic from the gate of the mold (See Fig.4). The cavity of the mold 2 is indicated at 4. When the tapered end 1a is worn, it is unscrewed and removed from the shank 1b, and then a new tapered end is screwed and fixed to the shank 1b. Figs.5 to 7 show modifications of joint to integrally connect a tapered end to an associated shank.

Fig.5 shows a joint comprising a tapered recess 5a formed on the rear end of the tapered end 1a and a tapered projection 5b integrally connected to the front end of the shank 1b. Fig 6 shows another joint comprising a long round-and- spherical recess 6a made on the rear end of the tapered end 1a and a long round-and-spherical projection 6b integrally connected to the front end of the shank 1b.

Fig.7 shows still another joint comprising a polygonal recess 7b made on the front end of the shank 1b to permit the polygonal portion of the tapered end 1a to fit in the polygonal recess 7b of the shank 1b. In this case the shank 1b must be larger across than the tapered end 1a.

The joints of Figs.5 and 7 are simple and easy to be made whereas the joint of Fig.6 permits rigid connection between the tapered end and the shank. As is the case with Figs.2 and 3, the male and female joint portions of Figs.5 to 7 may be provided to the tapered end and the shank in the opposite way to what are shown in Figs.5 to 7.

As may be understood from the above, the replacement of a worn-out part by a new one makes it unnecessary to grind and reshape the worn-out part, accordingly improving the efficiency with which a series of moldings are carried out in succession. Production of no pulverized metal eliminates a cause for contamination of molding machines and ill effect on the quality of precision molds. The shank is made of a hard metal such as iron or steel, and. the tapered end is made of a soft metal. Therefore, a worker can hammer the tool with strong force without fear of bending the shank and damaging the mold.

## Claims

1. An injection mold gate cleaner comprising a disposable tapered end (1a) of a metal which is less hard than iron, and a shank (1b) to which said disposable tapered end (1a) is detachably fixed.

2. An injection mold gate cleaner according to claim 1 wherein said tapered end (1a) has a conical shape, and said shank (1b) has a polygonal shape in cross section.

3. An injection mold gate cleaner according to claim 1 or 2 wherein said metal is brass, copper or aluminum, and said shank (1b) is made of iron or steel.

## Patentansprüche

1. Spritzgußformeinlaßreiniger, umfassend eine sich verjüngende Einmal-Spitze (1a) aus einem Metall, das weniger hart als Eisen ist, und einem Schaft (1b), an dem die Einmal-Spitze abnehmbar befestigt ist.

2. Spritzgußformeinlaßreiniger nach Anspruch 1, bei dem die sich verjüngende Spitze (1) eine konische Form und der Schaft (1b) eine im Querschnitt poligonale Gestalt hat.

3. Spritzgußformeinlaßreiniger nach Anspruch 1 oder 2, bei dem das Metall Messing, Kupfer oder Aluminium ist und der Schaft (1b) aus Eisen oder Stahl gefertigt ist.

## Revendications

1. Dispositif de nettoyage de l'entrée d'un moule à injection, comportant un bout effilé à jeter (1a) réalisé en un métal moins dur que le fer, et une tige (1b) à laquelle ledit bout effilé à jeter (1a) est attaché de manière à être enlevé.

2. Dispositif de nettoyage de l'entrée d'un moule à injection selon la revendication 1, dans lequel ledit bout effilé (1a) a une forme conique et, en section droite, ladite tige (1b) a une forme polygonale.

3. Dispositif de nettoyage de l'entrée d'un moule à injection selon la revendication 1 ou 2, dans lequel ledit métal est le laiton, le cuivre ou l'aluminium, et ladite tige (1b) est réalisée en fer ou en acier.
